# EUROPÄISCHE PATENTSCHRIFT

(11) **EP 4 096 909 B1**
(45) Veröffentlichungstag und Bekanntmachung des Hinweises auf die Patenterteilung: **24.01.2024**
(21) Anmeldenummer: 21701642.7
(22) Anmeldetag: 12.01.2021
(51) Int. Cl.: B29D 30/06, B29D 30/00

(54) **VERFAHREN UND VORRICHTUNG ZUM VULKANISIEREN VON REIFEN**
METHOD AND DEVICE FOR VULCANIZING TIRES
PROCÉDÉ ET DISPOSITIF DE VULCANISATION DE PNEUMATIQUES

(30) Priorität: 30.01.2020 DE 102020102299
(43) Veröffentlichungstag der Anmeldung: 07.12.2022
(73) Patentinhaber: Harburg-Freudenberger Maschinenbau GmbH, 21079 Hamburg (DE)
(72) Erfinder: BAHLKE, Stefan, 21337 Lüneburg (DE); STÖHRMANN, Andreas, 25826 St. Peter-Ording (DE)
(74) Vertreter: Klickow & Wetzel PartGmbB
(86) Internationale Anmeldenummer: PCT/DE2021/100027
(87) Internationale Veröffentlichungsnummer: WO 2021/151420

(56) Entgegenhaltungen:
- EP-A1- 2 949 442
- CN-A- 108 215 257
- JP-A- H06 328 455
- JP-A- H11 268 039
- US-A1- 2011 088 812

## Beschreibung

Die Erfindung betrifft eine Vorrichtung zum Vulkanisieren von Reifen im Sinne einer Reifenheizpresse.

Darüber hinaus betrifft die Erfindung ein Verfahren zum Vulkanisieren von Reifen.

Die Herstellung eines Reifens, beispielsweise für Fahrzeuge wie Personenkraftwagen (PKW), Lastkraftwagen (LKW) oder Motorräder, ist ein extrem aufwändiger Prozess, der aus einer Vielzahl von Herstellungs- und Prozessschritten besteht. Ursächlich dafür ist der komplizierte, aus einer erheblichen Zahl von verschiedenen Einzelkomponenten bestehende Reifenaufbau. Hinzu kommt, dass diese Vielzahl von Komponenten unter Druck- und Temperatureinwirkung, der sogenannten Vulkanisation, miteinander verbunden werden müssen. Der Vulkanisationsprozess ist ebenfalls maßgeblich hinsichtlich der Material- und Haftungseigenschaften des fertigen Reifens.

Nicht nur der fertige Reifen als Endprodukt des Reifenherstellungsprozesses, sondern bereits der Reifenrohling ist ein hochkomplexes und aus vielen Halbzeugelementen bestehendes Bauteil. Infolge des vielschichtigen Aufbaus müssen die Einzelkomponenten zunächst und vor einem Vulkanisationsvorgang zusammengefügt werden, d.h. die Reifenkomponenten werden größenrichtig vereinzelt und lage-, positions-, orientierungsgenau mindestens einer Reifenbaufbautrommel zugeführt, die sich innerhalb einer Reifenaufbaumaschine befindet. Auf diese Weise wird der Reifenrohling hergestellt und für die Vulkanisation vorbereitet.

Viele der Reifenkomponenten liegen als bahn- und/oder bogenförmige Halbzeuge vor: Verschiedene Gummimischungen und kautschukbasierende Kompositwerkstoffe, Textilgewebe bzw. Textilkord, Stahlgürtelgewebe und kautschukummantelte Wulstkerne. Um diese bahnund/oder bogenförmige Halbzeuge der Karkasstrommel zuzuführen werden innerhalb einer Reifenaufbaumaschine teilweise Lagenserver verwendet.

Infolge der erheblichen Anzahl von Produktionsschritten sind Produktionsstätten in großen Hallen realisiert und umfassen für die einzelnen Produktionsschritte geeignete Maschinen, Anlagen und Handhabungsmittel. Ergänzt werden diese Produktionslinien oder Produktionszentren durch Prestream- und Downstream- Equipment zur Vorbereitung von Reifenkomponenten oder Nachbereitung beziehungsweise Verpackung der fertigen Reifen.

Ein häufig erforderlicher Nachbehandlungsprozess nach der Vulkanisation kann durch eine gezielte Abkühlung des restwärmebehafteten Fertigreifens und optional unter einer Innendruckbeaufschlagung erfolgen. Da der restwärmebehafteten Fertigreifen strukturell instabil und sehr empfindlich ist, werden an die Handhabungsvorrichtungen zur Reifenentnahme aus der Vulkanisationskammer der Reifenvulkanisiermaschine und Transport beziehungsweise Einlegen in die Nachbehandlungsvorrichtung besonders hohe Anforderungen gestellt. Daher werden Handhabungsvorrichtungen mit geeigneten Greifwerkzeugen ausgestattet, die auch die empfindlichen Reifen greifen und aufnehmen können. Greifwerkzeuge dieser Ausbildung sind aufwändig und kostspielig.

Handhabungsvorrichtungen, die wegen ihrer Funktion innerhalb des Reifenherstellungsprozesses und in Bezug auf den Behandlungsraum der Reifenvulkanisiermaschine auch als Belader oder Entlader bezeichnet werden, müssen den zu handhabenden Reifen oder Reifenrohling über Wegstrecken in allen Raumrichtungen bewegen und gegebenenfalls die Reifenorientierung ändern.

Weiterhin müssen Bewegungen und Orientierungsänderungen möglichst schnell durchgeführt werden, um die benötigten Handhabungs- und Transportzeiten gering zu halten und die Gesamtprozesszeit der Reifenherstellung zu minimieren.

Derartige Vorrichtungen sind beispielsweise bereits aus der DE 10 2016 006 518 A1 bekannt.

Aus dem Stand der Technik ist sind weiterhin Verfahren und Vorrichtungen bekannt, mit denen Reifenrohlinge mithilfe einer als eine Beladevorrichtung ausgebildeten ersten Handhabungsvorrichtung in die Vulkanisationskammer einer Reifenheizpresse ladbar sind, in der Vulkanisationskammer der Reifenheizpresse zu Reifen vulkanisierbar sind und nach der Vulkanisation mithilfe einer als eine Entladevorrichtung ausgebildeten zweiten Handhabungsvorrichtung aus der Vulkanisationskammer der Reifenheizpresse entnehmbar sind.

Darüber hinaus ist aus der DE 10 2016 007 465 A1 auch bereits bekannt, die Reifen nach der Vulkanisation einer Nachbehandlungsvorrichtung, beispielsweise ausgebildet als ein Post-Curing-Inflator (PCI), zuzuführen.

Entsprechende Vorrichtungen und Verfahren sind auch aus der JP H11 268039 A, der US 2011/088812 A1, der EP 2 949 442 A1, der JP H06 328455 A und der CN 108 215 257 A bekannt.

Die JP H11 268039 A offenbart eine Vorrichtung zum Vulkanisieren von Reifen mit mindestens einer Vulkanisationskammer sowie mindestens einem Belader zur Beladung der mindestens einen Vulkanisationskammer mit einem Reifenrohling und mindestens einem Entlader zum Entladen eines zumindest teilweise vulkanisierten Reifens aus der mindestens einen Vulkanisationskammer, eine Nachbehandlungsvorrichtung und Transportbänder zum Abtransport der Reifen von der Nachbehandlungsvorrichtung.

Solche Vorrichtungen zum Vulkanisieren von Reifen können beispielsweise als Reifenheizpressen für Reifen von Personenkraftwagen, Lastkraftwagen oder Motorrädern ausgebildet sein.

Derartige Anlagen haben in der Regel aufgrund der vorstehend beschriebenen Komplexität und der Größe der herzustellenden Produkte einen hohen Platzbedarf, sodass die Produktionshallen für Reifen entsprechend groß sein müssen.

Eine Aufgabe der Erfindung ist es, eine Vorrichtung zur Vulkanisation von Reifen anzugeben, die einen geringeren Platzbedarf aufweist.

Diese Aufgabe wird erfindungsgemäß durch eine Vorrichtung zum Vulkanisieren von Reifen nach dem Patentanspruch 1 gelöst.

Eine weitere Aufgabe der Erfindung ist es, eine verbesserte Vorrichtung zum Vulkanisieren von Reifen anzugeben.

Diese Aufgabe wird erfindungsgemäß durch eine Vorrichtung zum Vulkanisieren von Reifen nach dem Patentanspruch 1 gelöst.

Eine weitere Aufgabe der Erfindung ist es ein Verfahren zum Vulkanisieren von Reifen anzugeben, das eine geringere Größe der eingesetzten Vorrichtung zum Vulkanisieren von Reifen unterstützt.

Diese Aufgabe wird erfindungsgemäß durch ein Verfahren zum Vulkanisieren von Reifen nach dem Patentanspruch 10 gelöst.

Eine weitere Aufgabe der Erfindung ist es ein verbessertes Verfahren zum Vulkanisieren von Reifen anzugeben.

Diese Aufgabe wird erfindungsgemäß durch ein Verfahren zum Vulkanisieren von Reifen nach dem Patentanspruch 10 gelöst.

In den Unteransprüchen werden vorteilhafte Ausgestaltungen des erfindungsgemäßen Verfahrens und der erfindungsgemäßen Vorrichtung offenbart.

Die im Folgenden offenbarten Merkmale eines Verfahrens zum Vulkanisieren von Reifen sind sowohl einzeln als auch in allen ausführbaren Kombinationen Teil der Erfindung.

In einem erfindungsgemäßen Verfahren zum Vulkanisieren von Reifen wird in einem Verfahrensschritt ein Reifenrohling in eine Vulkanisationskammer einer Reifenheizpresse geladen. In einem weiteren Schritt wird der Reifenrohling in der Vulkanisationskammer der Reifenheizpresse vulkanisiert oder zumindest teilweise vulkanisiert. In einem weiteren Schritt des Verfahrens wird der vulkanisierte Reifen oder der zumindest teilweise vulkanisierte Reifen aus der Vulkanisationskammer der Reifenheizpresse entladen. In einem Verfahrensschritt nach der Vulkanisation des Reifens wird der Reifen auf einer Ablageeinrichtung abgelegt. Sobald der Reifen bereit für den Abtransport ist und/oder gemäß des vorgegebenen Produktionstaktes abtransportiert werden muss, wird dieser auf ein Förderband bewegt und mit dem Förderband abtransportiert.

In einer bevorzugten Ausführungsform eines erfindungsgemäßen Verfahrens zum Vulkanisieren von Reifen wird in einem weiteren Schritt des Verfahrens der Reifen nach der zumindest teilweisen Vulkanisation in der Vulkanisationskammer einer Nachbehandlungsvorrichtung zugeführt. Nach der Nachbehandlung des Reifens in der Nachbehandlungsvorrichtung wird der Reifen dann auf der Ablageeinrichtung abgelegt.

Die Ablageeinrichtung wird somit als Zwischenspeicher für fertig vulkanisierte Reifen verwendet.

In einer erfindungsgemäßen Ausführungsform eines Verfahrens zum Vulkanisieren von Reifen wird der zur Entladung des vulkanisierten Reifens aus der Vulkanisationskammer oder der Nachbehandlungsvorrichtung als Zwischenspeicher für zumindest teilweise vulkanisierte Reifen verwendet, bevor diese auf der Ablageeinrichtung abgelegt werden.

In einer bevorzugten Ausführungsform eines erfindungsgemäßen Verfahrens zum Vulkanisieren von Reifen ist dieses zur Vulkanisation von Reifen mithilfe einer Doppelheizpresse ausgebildet.

Die Doppelheizpresse weist dabei zwei Vulkanisationskammern zum Vulkanisieren von Reifen und zwei Nachbehandlungsvorrichtungen auf.

In verschiedenen Ausführungsformen eines erfindungsgemäßen Verfahrens zum Vulkanisieren von Reifen mit einer Doppelheizpresse werden die zuvor offenbarten Verfahrensschritte analog angewandt.

In einer Ausführungsform des erfindungsgemäßen Verfahrens zum Vulkanisieren von Reifen mithilfe einer Doppelheizpresse wird für beide Vulkanisationskammern ein gemeinsamer Belader eingesetzt, mit dem die Vulkanisationskammern abwechselnd beladen werden.

In einer anderen Ausführungsform des erfindungsgemäßen Verfahrens zum Vulkanisieren von Reifen werden die Vulkanisationskammern der Doppelheizpresse jeweils mit einem individuell zugeordneten Belader beladen.

In einer Ausführungsform des erfindungsgemäßen Verfahrens zum Vulkanisieren von Reifen werden die Belader der Vulkanisationskammern parallel angesteuert, sodass die Vulkanisationskammern parallel beladen werden.

In einer Ausführungsform des erfindungsgemäßen Verfahrens zum Vulkanisieren von Reifen mithilfe einer Doppelheizpresse wird für beide Vulkanisationskammern ein gemeinsamer Entlader eingesetzt, mit dem die Vulkanisationskammern abwechselnd entladen werden.

In einer besonders bevorzugten Ausführungsform des erfindungsgemäßen Verfahrens zum Vulkanisieren von Reifen mithilfe einer Doppelheizpresse werden die in der jeweiligen Vulkanisationskammer zumindest teilweise vulkanisierten Reifen mit dem gemeinsamen Entlader in die jeweils zugeordnete Nachbehandlungsvorrichtung geladen und nach dem Abschluss der Nachbehandlung aus der jeweiligen Nachbehandlungsvorrichtung entladen.

In einer anderen Ausführungsform des erfindungsgemäßen Verfahrens zum Vulkanisieren von Reifen mithilfe einer Doppelheizpresse wird für jede Vulkanisationskammer ein individuell zugeordneter Entlader eingesetzt, mit denen die Vulkanisationskammern parallel entladen werden.

In einer weiteren Ausführungsform des erfindungsgemäßen Verfahrens zum Vulkanisieren von Reifen mithilfe einer Doppelheizpresse wird für jede Vulkanisationskammer ein individuell zugeordneter Entlader eingesetzt, mit denen die Vulkanisationskammern unabhängig voneinander entladen werden.

In einer bevorzugten Ausführungsform des erfindungsgemäßen Verfahrens zum Vulkanisieren von Reifen mithilfe einer Doppelheizpresse unter der Verwendung von jeder Vulkanisationskammer individuell zugeordneten Entladern werden die in der jeweiligen Vulkanisationskammer zumindest teilweise vulkanisierten Reifen mithilfe des jeweils zugeordneten Entladers in die jeweils zugeordnete Nachbehandlungsvorrichtung geladen und nach dem Abschluss der Nachbehandlung aus der jeweiligen Nachbehandlungsvorrichtung entladen.

In einer vorteilhaften Ausführungsform des erfindungsgemäßen Verfahrens zum Vulkanisieren von Reifen mithilfe einer Doppelheizpresse werden die Reifen nach dem Abschluss der Nachbehandlung in der jeweiligen Nachbehandlungsvorrichtung an der Ablagestelle der jeweils zugeordneten Ablageeinrichtung abgelegt.

In einer Ausführungsform des erfindungsgemäßen Verfahrens zum Vulkanisieren von Reifen mithilfe einer Doppelheizpresse werden die Reifen, sobald ein Abtransport erfolgen soll oder kann, mithilfe einer Schiebevorrichtung von der Ablagestelle der jeweiligen Ablageeinrichtung auf ein Transportband geschoben und mit diesem abtransportiert.

In einer bevorzugten Ausführungsform des erfindungsgemäßen Verfahrens zum Vulkanisieren von Reifen mithilfe einer Doppelheizpresse werden die mithilfe beider Vulkanisationskammern und ggf. Nachbehandlungsvorrichtungen vulkanisierten Reifen auf einem gemeinsamen Transportband abtransportiert.

In Ausführungsformen des erfindungsgemäßen Verfahrens zum Vulkanisieren von Reifen werden die Reifen mithilfe der jeweiligen Nachbehandlungsvorrichtung fertig vulkanisiert und/oder kontrolliert abgekühlt.

In bevorzugten Ausführungsformen des erfindungsgemäßen Verfahrens zum Vulkanisieren von Reifen werden die Reifen mithilfe der jeweiligen Nachbehandlungsvorrichtung während der Nachbehandlung zusätzlich zum Erhitzen und/oder Abkühlen von Innen mit einem Druck beaufschlagt.

In einer besonders bevorzugten Ausführungsform eines erfindungsgemäßen Verfahrens zum Vulkanisieren von Reifen werden die Reifenrohlinge bzw. im späteren Produktionsverlauf die zumindest teilweise vulkanisierten Reifen mithilfe der entsprechenden Handhabungsvorrichtungen, wie Belader und Entlader, auf geschwungenen Bahnen bewegt.

Durch die Bewegung der Reifenrohlinge oder der zumindest teilweise vulkanisierten Reifen auf geschwungenen Bahnen können diese um Bauelemente der Vorrichtung zum Vulkanisieren von Reifen herum bewegt werden, sodass eine kompaktere Bauform ermöglicht ist.

Die im folgenden offenbarten Merkmale einer Vorrichtung zum Vulkanisieren von Reifen sind sowohl einzeln als auch in allen ausführbaren Kombinationen Teil der Erfindung.

Eine erfindungsgemäße Vorrichtung zum Vulkanisieren von Reifen ist als eine Reifenheizpresse ausgebildet und weist mindestens eine Vulkanisationskammer zur Vulkanisation von Reifen auf.

Weiterhin weist eine erfindungsgemäße Vorrichtung mindestens einen Belader zur Beladung der mindestens einen Vulkanisationskammer mit Reifenrohlingen auf.

Darüber hinaus weist eine erfindungsgemäße Vorrichtung zum Vulkanisieren von Reifen mindestens einen Entlader auf, mit dem die zumindest teilweise vulkanisierten Reifen aus der mindestens einen Vulkanisationskammer entladbar sind.

Zudem weist eine erfindungsgemäße Vorrichtung zum Vulkanisieren von Reifen in einer vorteilhaften Ausführungsform mindestens eine Nachbehandlungsvorrichtung auf, mit der die zumindest teilweise vulkanisierten Reifen nachbehandelbar sind.

Die mindestens eine Nachbehandlungsvorrichtung weist in einer Ausführungsform der Erfindung eine Isolierhaube oder eine Isolierkammer und/oder eine Innenheizung und/oder eine Vorrichtung zur Beaufschlagung eines Reifens von innen mit Druckluft und/oder eine Kühlvorrichtung zur kontrollierten Abkühlung eines Reifens auf.

In einer bevorzugten Ausführungsform ist die mindestens eine Nachbehandlungsvorrichtung als eine Mehrfach-Nachbehandlungsvorrichtung ausgebildet, in der die zeitgleiche Nachbehandlung von mindestens zwei zumindest teilweise vulkanisierten Reifen in einer Nachbehandlungseinheit je Reifen ermöglicht ist.

In einer Ausführungsform der Erfindung weist die mindestens eine Nachbehandlungsvorrichtung dazu mindestens zwei Nachbehandlungseinheiten auf, die in einer bevorzugten Ausführungsform übereinander angeordnet sind.

In einer Ausführungsform weist eine erfindungsgemäße Vorrichtung zum Vulkanisieren von Reifen mindestens eine Ablageeinrichtung auf, auf der ein Reifen ablegbar ist.

Die mindestens eine Ablageeinrichtung ist dabei in einer Ausführungsform der Erfindung als eine sich im Wesentlichen eben erstreckende Fläche ausgebildet.

Die mindestens eine Ablageeinrichtung ist in einer bevorzugten Ausführungsform der Erfindung zwischen der Vulkanisationskammer und der Nachbehandlungsvorrichtung angeordnet.

In einer Ausführungsform der Erfindung ist die erfindungsgemäße Vorrichtung zum Vulkanisieren von Reifen als eine Doppelheizpresse ausgebildet, die eine erste Vulkanisationskammer und eine zweite Vulkanisationskammer aufweist.

Eine erfindungsgemäße Doppelheizpresse weist in einer vorteilhaften Ausführungsform einen Belader auf, der zur abwechselnden Beladung der ersten und der zweiten Vulkanisationskammer ausgebildet ist.

In einer weiteren erfindungsgemäßen Ausführungsform einer Doppelheizpresse weist diese zwei Belader auf, wobei jeder Belader einer Vulkanisationskammer zugeordnet ist.

In einer bevorzugten Ausführungsform der Erfindung mit zwei Beladern sind diese jeweils im Bereich der außenliegenden Seiten der Vulkanisationskammern um jeweils eine Achse drehbar gelagert.

In einer Ausführungsform der Erfindung mit zwei Beladern sind diese parallel ansteuerbar, sodass die Vulkanisationskammern parallel beladbar sind.

In einer weiteren Ausführungsform der Erfindung mit zwei Beladern sind diese unabhängig voneinander ansteuerbar, sodass die Vulkanisationskammern unabhängig voneinander beladbar sind.

Weiterhin weist eine erfindungsgemäße Doppelheizpresse in einer vorteilhaften Ausführungsform einen Entlader auf, der zur abwechselnden Entladung der ersten und der zweiten Vulkanisationskammer ausgebildet ist.

In einer weiteren erfindungsgemäßen Ausführungsform einer Doppelheizpresse weist diese zwei Entlader auf, die jeweils einer Vulkanisationskammer zugeordnet sind.

In einer erfindungsgemäßen Ausführungsform einer Doppelheizpresse mit zwei Entladern sind die Entlader parallel ansteuerbar, sodass die Vulkanisationskammern parallel entladbar sind.

In einer weiteren erfindungsgemäßen Ausführungsform einer Doppelheizpresse mit zwei Entladern sind die Entlader unabhängig voneinander ansteuerbar, sodass die Vulkanisationskammern unabhängig voneinander entladbar sind.

In einer erfindungsgemäßen Ausführungsform einer Doppelheizpresse mit zwei Entladern sind diese jeweils in einem mittig angeordneten Bereich der Vulkanisationskammern um mindestens eine Achse drehbar gelagert.

In einer bevorzugten Ausführungsform einer erfindungsgemäßen Vorrichtung zum Vulkanisieren von Reifen ausgebildet als eine Doppelheizpresse weist diese eine der ersten Vulkanisationskammer zugeordnete erste Nachbehandlungsvorrichtung und eine der ersten Nachbehandlungsvorrichtung zugeordnete erste Ablageeinrichtung auf. Weiterhin weist die erfindungsgemäße Doppelheizpresse dieser bevorzugten Ausführungsform eine der zweiten Vulkanisationskammer zugeordnete zweite Nachbehandlungsvorrichtung und eine der zweiten Nachbehandlungsvorrichtung zugeordnete zweite Ablageeinrichtung auf.

In einer vorteilhaften Ausführungsform einer erfindungsgemäßen Vorrichtung zum Vulkanisieren von Reifen ausgebildet als eine Doppelheizpresse ist der mindestens eine Entlader dazu ausgebildet den zumindest teilweise vulkanisierten Reifen aus einer Vulkanisationskammer zu entladen und anschließend in die jeweils zugeordnete Nachbehandlungsvorrichtung zu laden.

In einer besonders vorteilhaften Ausführungsform der Erfindung ist der mindestens eine Entlader weiterhin dazu ausgebildet, die nachbehandelten Reifen aus den Nachbehandlungsvorrichtungen zu entladen und auf der jeweils zugeordneten Ablageeinrichtung abzulegen.

In einer Ausführungsform der erfindungsgemäßen Vorrichtung zum Vulkanisieren von Reifen weist diese ein Transportband zum Abtransport der nachbehandelten bzw. fertig vulkanisierten Reifen auf.

In einer bevorzugten Ausführungsform der erfindungsgemäßen Vorrichtung zum Vulkanisieren von Reifen weist diese genau ein Transportband zum Abtransport der nachbehandelten bzw. fertig vulkanisierten Reifen auf.

In einer Ausführungsform der erfindungsgemäßen Vorrichtung zum Vulkanisieren von Reifen weist diese mindestens eine Schiebevorrichtung auf, mit der ein auf einer Ablageeinrichtung abgelegter Reifen auf das Transportband schiebbar ist.

In einer Ausführungsform der erfindungsgemäßen Vorrichtung zum Vulkanisieren von Reifen ist jeder Ablageeinrichtung eine Schiebevorrichtung zugeordnet.

Eine Schiebevorrichtung weist in einer Ausführungsform der Erfindung mindestens einen steuerbaren Zylinder und einen am freien Ende des Zylinderkolbens befestigten Schieber auf, der den Reifen beim Schieben des Reifens auf das Transportband kontaktiert.

In einer bevorzugten Ausführungsform einer erfindungsgemäßen Reifenheizpresse ist durch den mithilfe der speziellen Anordnung der Baugruppen realisierten Aufbau der Reifenheizpresse eine Breite von nur etwa 3m ermöglicht.

In einer Ausführungsform der Erfindung ist die Vorrichtung zum Vulkanisieren von Reifen dabei als eine Doppelheizpresse für LKW-Reifen ausgebildet.

In den nachfolgenden Figuren sind beispielhafte Ausführungsformen erfindungsgemäßer Vorrichtungen und Verfahren zum Vulkanisieren von Reifen dargestellt. Es zeigen:
- Figur 1:: Eine schematische Darstellung einer Ausführungsform einer erfindungsgemäßen Vorrichtung zum Vulkanisieren von Reifen in einer Ansicht von oben mit angedeuteten Positionen des Reifenrohlings beim Beladen einer Vulkanisationskammer,
- Figur 2:: Eine schematische Darstellung der in Figur 1 gezeigten Ausführungsform einer erfindungsgemäßen Vorrichtung zum Vulkanisieren von Reifen in einer Ansicht von oben mit angedeuteten Positionen des Reifens beim Entladen einer Vulkanisationskammer und Beladen einer Nachbehandlungsvorrichtung,
- Figur 3:: Eine schematische Darstellung der in den Figuren 1 und 2 gezeigten Ausführungsform einer erfindungsgemäßen Vorrichtung zum Vulkanisieren von Reifen in einer Ansicht von oben mit angedeuteten Positionen des Reifenrohlings / Reifens vom Beladen einer Vulkanisationskammer bis zum Beladen einer Nachbehandlungsvorrichtung und
- Figur 4:: Die Darstellung aus Figur 3 mit zusätzlichen Positionen der Reifen im Bereich der Vorrichtung zum Vulkanisieren von Reifen nach der Nachbehandlung.

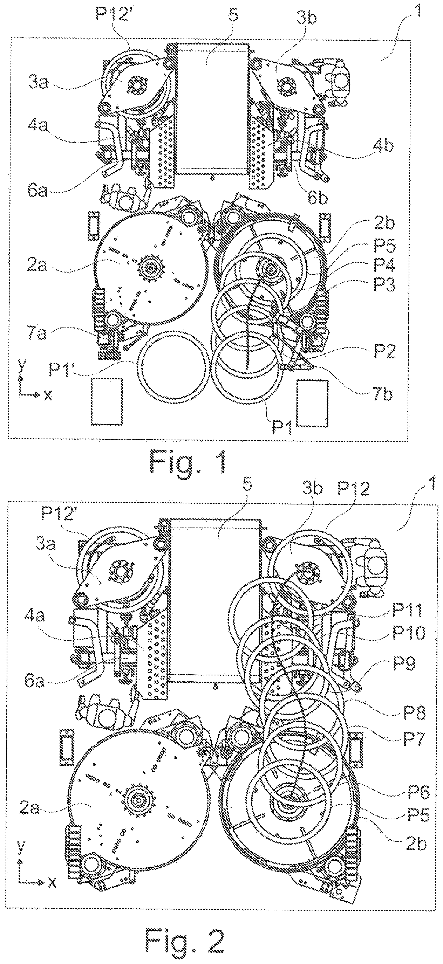

Figur 1 zeigt eine schematische Darstellung einer Ausführungsform einer erfindungsgemäßen Vorrichtung zum Vulkanisieren von Reifen (1) ausgebildet als eine Doppelheizpresse in einer Ansicht von oben. Nicht dargestellt ist unter anderem die mindestens eine Entladevorrichtung der Doppelheizpresse.

Die Vorrichtung zum Vulkanisieren von Reifen (1) weist eine erste Vulkanisationskammer (2a) und eine zweite Vulkanisationskammer (2b), eine erste Nachbehandlungsvorrichtung (3a) und eine zweite Nachbehandlungsvorrichtung (3b), eine erste Ablageeinrichtung (4a) und eine zweite Ablageeinrichtung (4b) und ein Transportband (5) auf.

Weiterhin weist die Vorrichtung zum Vulkanisieren von Reifen (1) einen Belader (7) auf, der als zwei jeweils einer Vulkanisationskammer (2a, 2b) zugeordnete Belader (7a, 7b) ausgebildet ist.

Im Bereich der Ablageeinrichtungen (4a, 4b) ist jeweils eine Schiebevorrichtung (6a, 6b) angeordnet, mit der ein Reifen von der jeweiligen Ablageeinrichtung (4a, 4b) auf das mittig angeordnete Transportband (5) schiebbar ist.

Weiterhin dargestellt sind die durch Ringe angedeuteten Positionen P1 bis P5 des auf der rechten Seite der Doppelheizpresse verarbeiteten Reifenrohlings beim Beladen der zweiten Vulkanisationskammer (2b) mithilfe des zugeordneten Beladers (7b) und die angedeuteten Positionen P1' eines auf der linken Seite zu verarbeitenden Reifenrohlings vor der ersten Vulkanisationskammer (2a) und P12' eines Reifens in der ersten Nachbehandlungsvorrichtung (3a).

Das Zentrum des Reifenrohlings bewegt sich beim Beladen der zweiten Vulkanisationskammer (2b) mithilfe des zugeordneten Beladers (7b) etwa auf der gestrichelt dargestellten Linie mit einem leichten Bogen. Beim Beladen der ersten Vulkanisationskammer (2a) mithilfe des zugeordneten Beladers (7a) bewegt der Reifenrohling sich auf einer entsprechenden, an der Längsachse der Vorrichtung zum Vulkanisieren von Reifen (1) gespiegelten Linie.

In Figur 2 ist die in Figur 1 gezeigte Ausführungsform einer erfindungsgemäßen Vorrichtung zum Vulkanisieren von Reifen (1) in einer Ansicht von oben mit den durch Ringe angedeuteten Positionen P5 bis P12 des zumindest teilweise vulkanisierten Reifens beim Entladen der zweiten Vulkanisationskammer (2b) und beim Beladen der zweiten Nachbehandlungsvorrichtung (3b) dargestellt.

Vorzugsweise erfolgt die Entladung der zweiten Vulkanisationskammer (2b) und die Beladung der zweiten Nachbehandlungsvorrichtung (3b) in einem Vorgang.

Dazu ist in einer Ausführungsform der Erfindung der in dieser Figur nicht dargestellte Entlader sowohl zum Entladen der zweiten Vulkanisationskammer (2b) als auch zum Beladen der zweiten Nachbehandlungsvorrichtung (3b) ausgebildet.

Besonders bevorzugt ist der Entlader zum wechselweisen Entladen beider Vulkanisationskammern (2a, 2b) und zum Beladen der jeweils zugeordneten Nachbehandlungsvorrichtung (3a, 3b) mit dem jeweiligen zumindest teilweise vulkanisierten Reifen ausgebildet.

In einer anderen Ausführungsform der Erfindung ist jeder Vulkanisationskammer (2a, 2b) ein individueller Entlader zugeordnet.

Das Zentrum des zumindest teilweise vulkanisierten Reifens bewegt sich zwischen den Positionen P5 und P12 etwa auf der gestrichelt dargestellten Linie. Die Linie ist in zwei in entgegengerichtete Richtungen gewölbt. Zunächst ist die Linie nach rechts und anschließend nach links gewölbt.

Für einen auf der Seite der ersten Vulkanisationskammer (2a) und der ersten Nachbehandlungsvorrichtung (3a) produzierten Reifen ist die Bewegung des Reifens entsprechend gespiegelt an der Längsachse der Vorrichtung zum Vulkanisieren von Reifen (1) ausgebildet.

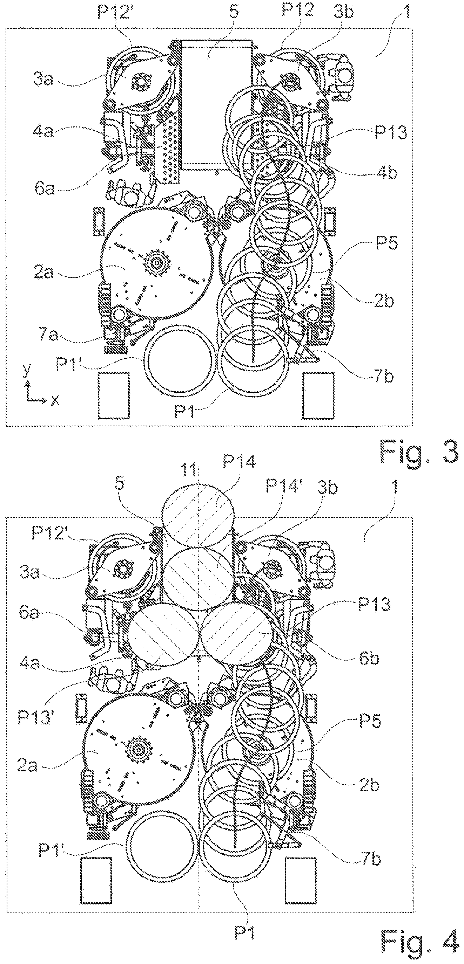

Figur 3 zeigt eine schematische Darstellung der in den Figuren 1 und 2 gezeigten Ausführungsform einer erfindungsgemäßen Vorrichtung zum Vulkanisieren von Reifen (1) in einer Ansicht von oben mit durch Ringe angedeuteten Positionen P1 bis P12 des Reifenrohlings/Reifens vom Beladen der zweiten Vulkanisationskammer (2b) bis zum Beladen der zweiten Nachbehandlungsvorrichtung (3b) und der Position P13 des Reifens auf der zweiten Ablageeinrichtung (4b), auf die der Reifen nach der Nachbehandlung in der zweiten Nachbehandlungsvorrichtung (3b) verbracht wird.

Mit der gestrichelt dargestellten Linie ist die ungefähre Bahn der Bewegung des Zentrums des Reifenrohlings bzw. des zumindest teilweise vulkanisierten Reifens von der Beladung der zweiten Vulkanisationskammer (2b) bis zum Beladen der zweiten Nachbehandlungsvorrichtung (3b) illustriert. Die Linie weist drei Wölbungen auf, wobei diese zunächst nach links, dann nach rechts und anschließend wieder nach links gewölbt ist.

Die ungefähre Bahn der Bewegung des Zentrums eines auf der Seite der ersten Vulkanisationskammer (2a) und der ersten Nachbehandlungsvorrichtung (3a) produzierten Reifens ist entsprechend gespiegelt an der Längsachse der Vorrichtung zum Vulkanisieren von Reifen (1) gespiegelt ausgebildet.

In Figur 4 ist die Darstellung aus Figur 3 mit zusätzlichen hervorgehobenen Positionen P13 und P13` der Reifen im Bereich der Vorrichtung zum Vulkanisieren von Reifen (1) nach der Nachbehandlung auf den jeweiligen Ablageeinrichtungen (4a, 4b) sowie den Positionen P14 und P14' auf dem Transportband (5) weiter illustriert. Zudem ist die Längsachse M der Vorrichtung zum Vulkanisieren von Reifen (1) eingezeichnet.

## Patentansprüche

1. Vorrichtung zum Vulkanisieren von Reifen (1) aufweisend mindestens eine Vulkanisationskammer (2a, 2b) sowie mindestens einen Belader (7a, 7b) zur Beladung der mindestens einen Vulkanisationskammer (2) mit einem Reifenrohling und mindestens einem Entlader zum Entladen eines zumindest teilweise vulkanisierten Reifens aus der mindestens einen Vulkanisationskammer (2a, 2b), **dadurch gekennzeichnet, dass** die Vorrichtung zum Vulkanisieren von Reifen (1) mindestens eine Ablageeinrichtung (4a, 4b), mindestens eine Schiebevorrichtung (6a, 6b) und ein Transportband (5) aufweist, wobei ein Reifen mithilfe des mindestens einen Entladers aus der mindestens einen Vulkanisationskammer (2a, 2b) entladbar und auf der mindestens einen Ablageeinrichtung (4a, 4b) ablegbar ist und wobei der auf der mindestens einen Ablageeinrichtung (4a, 4b) abgelegte Reifen mithilfe der mindestens einen Schiebevorrichtung (6a, 6b) zum Abtransport des Reifens auf das Transportband (5) schiebbar ist.

2. Vorrichtung zum Vulkanisieren von Reifen (1) nach Anspruch 1, **dadurch gekennzeichnet, dass** diese mindestens eine Nachbehandlungsvorrichtung (3a, 3b) zur Nachbehandlung eines zumindest teilweise vulkanisierten Reifens aufweist.

3. Vorrichtung zum Vulkanisieren von Reifen (1) nach einem der Ansprüche 1 und 2, **dadurch gekennzeichnet, dass** diese als eine Doppelheizpresse ausgebildet ist, die eine erste Vulkanisationskammer (2a) und eine zweite Vulkanisationskammer (2b) aufweist.

4. Vorrichtung zum Vulkanisieren von Reifen (1) nach den Ansprüchen 1 bis 3, **dadurch gekennzeichnet, dass** diese eine der ersten Vulkanisationskammer (2a) zugeordnete erste Nachbehandlungsvorrichtung (3a) sowie eine der ersten Nachbehandlungsvorrichtung (3a) zugeordnete erste Ablageeinrichtung (4a) sowie eine der zweiten Vulkanisationskammer (2b) zugeordnete zweite Nachbehandlungsvorrichtung (3b) und eine der zweiten Nachbehandlungsvorrichtung (3b) zugeordnete zweite Ablageeinrichtung (4b) aufweist.

5. Vorrichtung zum Vulkanisieren von Reifen (1) nach einem der vorstehenden Ansprüche, **dadurch gekennzeichnet, dass** jeder Ablageeinrichtung (4a, 4b) eine individuelle Schiebevorrichtung (6a, 6b) zugeordnet ist.

6. Vorrichtung zum Vulkanisieren von Reifen (1) nach einem der vorstehenden Ansprüche, **dadurch gekennzeichnet, dass** diese als eine Doppelheizpresse für LKW-Reifen ausgebildet ist.

7. Vorrichtung zum Vulkanisieren von Reifen (1) nach einem der vorstehenden Ansprüche, **dadurch gekennzeichnet, dass** eine Breite der Vorrichtung zum Vulkanisieren von Reifen (1) von etwa 3,0 m bis 3,1 m realisiert ist.

8. Vorrichtung zum Vulkanisieren von Reifen (1) nach einem der vorstehenden Ansprüche, **dadurch gekennzeichnet, dass** diese einen der ersten Vulkanisationskammer (2a) zugeordneten ersten Belader (7a) und einen der zweiten Vulkanisationskammer (2b) zugeordneten zweiten Belader (7b) aufweist.

9. Vorrichtung zum Vulkanisieren von Reifen (1) nach Anspruch 8, **dadurch gekennzeichnet, dass** der erste Belader (7a) und der zweite Belader (7b) parallel ansteuerbar sind, sodass durch diese die Vulkanisationskammern (2a, 2b) parallel beladbar sind.

10. Verfahren zum Vulkanisieren von Reifen, **dadurch gekennzeichnet, dass** ein Reifenrohling in einem Verfahrensschritt mithilfe eines Beladers (7a, 7b) in eine Vulkanisationskammer (2a, 2b) einer Vorrichtung zum Vulkanisieren von Reifen (1) geladen wird und dass der Reifenrohling in einem weiteren Verfahrensschritt in der Vulkanisationskammer (2a, 2b) zumindest teilweise vulkanisiert wird und dass der zumindest teilweise vulkanisierte Reifen in einem Verfahrensschritt mithilfe eines Entladers aus der Vulkanisationskammer (2a, 2b) entladen wird und dass der zumindest teilweise vulkanisierte Reifen in einem weiteren Verfahrensschritt auf einer Ablageeinrichtung (4a, 4b) abgelegt wird und dass der zumindest teilweise vulkanisierte Reifen in einem weiteren Verfahrensschritt mithilfe einer Schiebevorrichtung (6a, 6b) auf ein Transportband (5) geschoben wird und dass der zumindest teilweise vulkanisierte Reifen in einem weiteren Verfahrensschritt mit dem Transportband (5) abtransportiert wird.

11. Verfahren zum Vulkanisieren von Reifen nach Anspruch 10, **dadurch gekennzeichnet, dass** der zumindest teilweise vulkanisierte Reifen nach der Vulkanisation in der Vulkanisationskammer (2a, 2b) zur Nachbehandlung in eine Nachbehandlungsvorrichtung (3a, 3b) geladen wird und dass der Reifen nach der Nachbehandlung in der Nachbehandlungsvorrichtung (3a, 3b) auf der Ablageeinrichtung (4a, 4b) abgelegt wird.

12. Verfahren zum Vulkanisieren von Reifen nach einem der Ansprüche 10 und 11, **dadurch gekennzeichnet, dass** es sich um ein Verfahren zum Vulkanisieren mithilfe einer als eine Doppelheizpresse ausgebildeten Vorrichtung zum Vulkanisieren von Reifen (1) handelt, wobei die Vulkanisationskammern (2a, 2b) parallel oder wechselweise beladen und entladen werden.

13. Verfahren zum Vulkanisieren von Reifen nach Anspruch 12, **dadurch gekennzeichnet, dass** ein erster Belader (7a) die erste Vulkanisationskammer (2a) und ein zweiter Belader (7b) die zweite Vulkanisationskammer (2b) mit Reifenrohlingen belädt und dass ein erster Entlader die zumindest teilweise vulkanisierte Reifen aus der ersten Vulkanisationskammer (2a) und ein zweiter Entlader die zumindest teilweise vulkanisierten Reifen aus der zweiten Vulkanisationskammer (2b) entlädt.

14. Verfahren zum Vulkanisieren von Reifen nach einem der Ansprüche 11 bis 13, **dadurch gekennzeichnet, dass** der jeweilige Entlader auch die Beladung der zugeordneten Nachbehandlungsvorrichtung(en) mit den zumindest teilweise vulkanisierten Reifen und die Entladung der nachbehandelten Reifen aus der/den Nachbehandlungsvorrichtung(en) vornimmt.

15. Verfahren zum Vulkanisieren von Reifen nach einem der Ansprüche 10 bis 14 **dadurch gekennzeichnet, dass** eine Vorrichtung zum Vulkanisieren von Reifen (1) nach einem der Ansprüche 1 bis 9 verwendet ist.

## Claims

1. Apparatus for vulcanizing tyres (1), having at least one vulcanization chamber (2a, 2b), and having at least one loader (7a, 7b) for loading the at least one vulcanization chamber (2) with a green tyre and at least one unloader for unloading an at least partially vulcanized tyre from the at least one vulcanization chamber (2a, 2b), **characterized in that** the apparatus for vulcanizing tyres (1) has at least one set-down device (4a, 4b), at least one pushing apparatus (6a, 6b) and a transporting belt (5), wherein, with the aid of the at least one unloader, a tyre is able to be unloaded from the at least one vulcanization chamber (2a, 2b) and said tyre is able to be set down on the at least one set-down device (4a, 4b), and wherein, with the aid of the at least one pushing apparatus (6a, 6b), the tyre set down on the at least one set-down device (4a, 4b) is able to be pushed onto the transporting belt (5) for the purpose of transporting the tyre away.

2. Apparatus for vulcanizing tyres (1) according to Claim 1, **characterized in that** said apparatus has at least one aftertreatment apparatus (3a, 3b) for aftertreatment of an at least partially vulcanized tyre.

3. Apparatus for vulcanizing tyres (1) according to either of Claims 1 and 2, **characterized in that** said apparatus is designed as a dual heating press, which has a first vulcanization chamber (2a) and a second vulcanization chamber (2b).

4. Apparatus for vulcanizing tyres (1) according to one of Claims 1 to 3, **characterized in that** said apparatus has a first aftertreatment apparatus (3a) assigned to the first vulcanization chamber (2a) and a first set-down device (4a) assigned to the first aftertreatment apparatus (3a), and has a second aftertreatment apparatus (3b) assigned to the second vulcanization chamber (2b) and a second set-down device (4b) assigned to the second aftertreatment apparatus (3b).

5. Apparatus for vulcanizing tyres (1) according to one of the preceding claims, **characterized in that** each set-down device (4a, 4b) is assigned an individual pushing apparatus (6a, 6b).

6. Apparatus for vulcanizing tyres (1) according to one of the preceding claims, **characterized in that** said apparatus is designed as a dual heating press for lorry tyres.

7. Apparatus for vulcanizing tyres (1) according to one of the preceding claims, **characterized in that** a width of the apparatus for vulcanizing tyres (1) of approximately 3.0 m to 3.1 m is realized.

8. Apparatus for vulcanizing tyres (1) according to one of the preceding claims, **characterized in that** said apparatus has a first loader (7a) assigned to the first vulcanization chamber (2a) and a second loader (7b) assigned to the second vulcanization chamber (2b) .

9. Apparatus for vulcanizing tyres (1) according to Claim 8, **characterized in that** the first loader (7a) and the second loader (7b) are able to be activated in parallel, so that, by way of said loaders, the vulcanization chambers (2a, 2b) are able to be loaded in parallel.

10. Method for vulcanizing tyres, **characterized in that**, in a method step, with the aid of a loader (7a, 7b), a green tyre is loaded into a vulcanization chamber (2a, 2b) of an apparatus for vulcanizing tyres (1), and **in that**, in a further method step, the green tyre is at least partially vulcanized in the vulcanization chamber (2a, 2b), and **in that**, in a method step, with the aid of an unloader, the at least partially vulcanized tyre is unloaded from the vulcanization chamber (2a, 2b), and **in that**, in a further method step, the at least partially vulcanized tyre is set down on a set-down device (4a, 4b), and **in that**, in a further method step, with the aid of a pushing apparatus (6a, 6b), the at least partially vulcanized tyre is pushed onto a transporting belt (5), and **in that**, in a further method step, the at least partially vulcanized tyre is transported away by the transporting belt (5).

11. Method for vulcanizing tyres according to Claim 10, **characterized in that**, following vulcanization in the vulcanization chamber (2a, 2b), the at least partially vulcanized tyre is loaded into an aftertreatment apparatus (3a, 3b) for aftertreatment, and **in that**, following aftertreatment in the aftertreatment apparatus (3a, 3b), the tyre is set down on the set-down device (4a, 4b).

12. Method for vulcanizing tyres according to either of Claims 10 and 11, **characterized in that** said method is a method for vulcanizing with the aid of an apparatus for vulcanizing tyres (1) that is designed as a dual heating press, wherein the vulcanization chambers (2a, 2b) are loaded and unloaded in parallel or alternately.

13. Method for vulcanizing tyres according to Claim 12, **characterized in that** a first loader (7a) loads the first vulcanization chamber (2a) with green tyres and a second loader (7b) loads the second vulcanization chamber (2b) with green tyres, and **in that** a first unloader unloads the at least partially vulcanized tyres from the first vulcanization chamber (2a) and a second unloader unloads the at least partially vulcanized tyres from the first vulcanization chamber (2b).

14. Method for vulcanizing tyres according to one of Claims 11 to 13, **characterized in that** the respective unloader also performs the loading of the assigned aftertreatment apparatus(es) with the at least partially vulcanized tyres and the unloading of the aftertreated tyres from the aftertreatment apparatus(es).

15. Method for vulcanizing tyres according to one of Claims 10 to 14, **characterized in that** an apparatus for vulcanizing tyres (1) according to one of Claims 1 to 9 is used.

## Revendications

1. Dispositif de vulcanisation de pneus (1) présentant au moins une chambre de vulcanisation (2a, 2b) ainsi qu'au moins un chargeur (7a, 7b) pour le chargement de l'au moins une chambre de vulcanisation (2) avec une ébauche de pneu et au moins un déchargeur pour le déchargement d'un pneu au moins partiellement vulcanisé de l'au moins une chambre de vulcanisation (2a, 2b), **caractérisé en ce que** le dispositif de vulcanisation de pneus (1) présente au moins un appareil de dépôt (4a, 4b), au moins un appareil de poussée (6a, 6b) et une bande transporteuse (5), un pneu pouvant être déchargé de l'au moins une chambre de vulcanisation (2a, 2b) à l'aide de l'au moins un déchargeur et déposé sur l'au moins un appareil de dépôt (4a, 4b) et le pneu déposé sur l'au moins un appareil de dépôt (4a, 4b) pouvant être poussé sur la bande transporteuse (5) à l'aide de l'au moins un dispositif de poussée (6a, 6b) pour l'évacuation du pneu.

2. Dispositif de vulcanisation de pneus (1) selon la revendication 1, **caractérisé en ce que** celui-ci présente au moins un dispositif de post-traitement (3a, 3b) pour le post-traitement d'un pneu au moins partiellement vulcanisé.

3. Dispositif de vulcanisation de pneus (1) selon l'une quelconque des revendications 1 et 2, **caractérisé en ce que** celui-ci est configuré sous la forme d'une presse chauffante double, qui présente une première chambre de vulcanisation (2a) et une deuxième chambre de vulcanisation (2b).

4. Dispositif de vulcanisation de pneus (1) selon les revendications 1 à 3, **caractérisé en ce que** celui-ci présente un premier dispositif de post-traitement (3a) associé à la première chambre de vulcanisation (2a) ainsi qu'un premier appareil de dépôt (4a) associé au premier dispositif de post-traitement (3a) ainsi qu'un deuxième dispositif de post-traitement (3b) associé à la deuxième chambre de vulcanisation (2b) et un deuxième appareil de dépôt (4b) associé au deuxième dispositif de post-traitement (3b).

5. Dispositif de vulcanisation de pneus (1) selon l'une quelconque des revendications précédentes, **caractérisé en ce que** chaque appareil de dépôt (4a, 4b) est associé à un dispositif de poussée individuel (6a, 6b).

6. Dispositif de vulcanisation de pneus (1) selon l'une quelconque des revendications précédentes, **caractérisé en ce que** celui-ci est configuré sous la forme d'une presse chauffante double pour pneus de camion.

7. Dispositif de vulcanisation de pneus (1) selon l'une quelconque des revendications précédentes, **caractérisé en ce qu'**une largeur du dispositif de vulcanisation de pneus (1) est réalisée d'environ 3,0 m à 3,1 m.

8. Dispositif de vulcanisation de pneus (1) selon l'une quelconque des revendications précédentes, **caractérisé en ce que** celui-ci présente un premier chargeur (7a) associé à la première chambre de vulcanisation (2a) et un deuxième chargeur (7b) associé à la deuxième chambre de vulcanisation (2b).

9. Dispositif de vulcanisation de pneus (1) selon la revendication 8, **caractérisé en ce que** le premier chargeur (7a) et le deuxième chargeur (7b) peuvent être commandés en parallèle, de telle sorte que les chambres de vulcanisation (2a, 2b) peuvent être chargées en parallèle par ceux-ci.

10. Procédé de vulcanisation de pneus, **caractérisé en ce qu'**une ébauche de pneu est chargée dans une étape de procédé à l'aide d'un chargeur (7a, 7b) dans une chambre de vulcanisation (2a, 2b) d'un dispositif de vulcanisation de pneus (1) et **en ce que** l'ébauche de pneu est au moins partiellement vulcanisée dans une autre étape de procédé dans la chambre de vulcanisation (2a, 2b) et **en ce que** le pneu au moins partiellement vulcanisé est déchargé de la chambre de vulcanisation (2a, 2b) dans une étape de procédé à l'aide d'un déchargeur, 2b) et **en ce que** le pneu au moins partiellement vulcanisé est déposé dans une autre étape de procédé sur un appareil de dépôt (4a, 4b) et **en ce que** le pneu au moins partiellement vulcanisé est poussé dans une autre étape de procédé sur une bande transporteuse (5) à l'aide d'un dispositif de poussée (6a, 6b) et **en ce que** le pneu au moins partiellement vulcanisé est évacué dans une autre étape de procédé avec la bande transporteuse (5).

11. Procédé de vulcanisation de pneus selon la revendication 10, **caractérisé en ce que** le pneu au moins partiellement vulcanisé est chargé dans un dispositif de post-traitement (3a, 3b) après la vulcanisation dans la chambre de vulcanisation (2a, 2b) pour le post-traitement, et **en ce que** le pneu est déposé sur l'appareil de dépôt (4a, 4b) après le post-traitement dans le dispositif de post-traitement (3a, 3b).

12. Procédé de vulcanisation de pneus selon l'une quelconque des revendications 10 et 11, **caractérisé en ce qu'**il s'agit d'un procédé de vulcanisation à l'aide d'un dispositif de vulcanisation de pneus (1) configuré sous la forme d'une presse chauffante double, les chambres de vulcanisation (2a, 2b) étant chargées et déchargées en parallèle ou en alternance.

13. Procédé de vulcanisation de pneus selon la revendication 12, **caractérisé en ce qu'**un premier chargeur (7a) charge la première chambre de vulcanisation (2a) et un deuxième chargeur (7b) charge la deuxième chambre de vulcanisation (2b) avec des ébauches de pneus et **en ce qu'**un premier déchargeur décharge les pneus au moins partiellement vulcanisés de la première chambre de vulcanisation (2a) et un deuxième déchargeur décharge les pneus au moins partiellement vulcanisés de la deuxième chambre de vulcanisation (2b).

14. Procédé de vulcanisation de pneus selon l'une quelconque des revendications 11 à 13, **caractérisé en ce que** le déchargeur respectif effectue également le chargement du ou des dispositifs de post-traitement associés avec les pneus au moins partiellement vulcanisés et le déchargement des pneus post-traités du ou des dispositifs de post-traitement.

15. Procédé de vulcanisation de pneus selon l'une quelconque des revendications 10 à 14, **caractérisé en ce qu'**un dispositif de vulcanisation de pneus (1) selon l'une quelconque des revendications 1 à 9 est utilisé.
